# EUROPÄISCHE PATENTSCHRIFT

(11) **EP 1 174 284 B1**
(45) Veröffentlichungstag und Bekanntmachung des Hinweises auf die Patenterteilung: **12.04.2006**
(21) Anmeldenummer: 01116768.1
(22) Anmeldetag: 20.07.2001
(51) Int. Cl.: B60B 21/10, B60B 21/04, B60C 17/06

(54) **Reifenstützring**
Support ring for tyre
Bague de support pour pneu

(30) Priorität: 21.07.2000 DE 10035464
(43) Veröffentlichungstag der Anmeldung: 23.01.2002
(73) Patentinhaber: Bauer, Adolf, Dr., 71379 Leutenbach (DE)
(72) Erfinder: Bauer, Adolf, Dr., 71379 Leutenbach (DE)
(74) Vertreter: Gille Hrabal Struck Neidlein Prop Roos

(56) Entgegenhaltungen:
- DE-A- 2 441 235
- DE-A- 3 809 422
- DE-A- 3 809 423
- US-A- 5 232 033

## Beschreibung

Die Erfindung betrifft ein Rad für ein Fahrzeug. Dieses umfaßt eine Felge und einen Reifen.

Aus der Druckschrift WO 94/19204 (PCT-Patentanmeldung) ist eine Felge eines Rades bekannt, bei der ein Felgenhorn das andere überragt. Diese Felge wird Hochhornfelge genannt. Der Reifen wird während einer Kurvenfahrt verbessert seitlich gestützt. Das Fahrverhalten wird so im Vergleich zu einer konventionellen Felge verbessert.

Zur Zeit sind Kraftfahrzeuge fast ausschließlich mit Felgen mit gleich hohen Felgenhörnern ausgerüstet, mit denen nicht die Fahrstabilität der Hochhornfelge erreicht werden kann. Um die gleiche Fahrstabilität zu erreichen, müßten die üblichen Felgen ausgetauscht werden. Die Austauschkosten sind entsprechend groß.

US 5 232 033 A zeigt ein gattungsgemäßes Rad.

Aufgabe der Erfindung ist die Verbesserung der Fahreigenschaften insbesondere in einer Kurve bei den vorhandenen Rädern.

Die Aufgabe der Erfindung wird durch ein Rad mit den Merkmalen des ersten Anspruchs gelöst. Vorteilhafte Ausgestaltungen ergeben sich aus den Unteransprüchen.

Das anspruchsgemäße Rad ist mit einem ringartigen Element zwischen einer Felge und einem Reifen versehen.

Ein Rad eines Kraftfahrzeuges, das eine konventionelle Felge und einen Reifen umfaßt, kann nachträglich mit dem relativ preiswerten ringartigen Element nachgerüstet werden. Die Nachrüstkosten sind im Vergleich zum Austausch konventioneller Felgen gegen die aus dem Stand der Technik bekannten Hochhornfelgen gering. Es kann dann eine Fahrstabilität bei Kurvenfahrten erzielt werden, die der der Hochhornfelge nahekommt.

Der Außendurchmesser des ringartigen Elements stimmt im wesentlichen mit dem Außendurchmesser der Felge überein. Einerseits wird der Reifen seitlich besonders nahe bei seiner Lauffläche also auf einem größeren Durchmesser im Vergleich zur Felge ohne das ringartige Element abgestützt. Andererseits ragt das ringartige Element nicht oder nur kaum über die Felge hinaus. Das ringartige Element wird so gegen Einwirkung von außen weitgehend geschützt.

Die Breite (d.h. der Querschnitt) des oder der ringartigen Elemente nehmen zum Außendurchmesser hin so zu, dass die an den Reifen angrenzende Fläche des betreffenden ringartigen Elementes nach innen geneigt ist. Sie reicht also mehr und mehr zur Felgenmitte, also in das Innere der Felge, je größer der Durchmesser des Ringes ist, also je weiter der Mittelpunkt des Ringes entfernt ist. Die Fläche ist insbesondere eben. Der Reifen wird also mit zunehmendem Außendurchmesser eingeschnürt. Der Reifenwulst wird also etwa auf Höhe des äußeren Felgenhornrandes vom ringförmigen Element zur Felgenmitte verschoben, so daß der Reifen noch innerhalb der Kontur der Felgenhörner nach außen vorgespannt wird. Durch die so erzielte vorspannung werden besonders gute Fahreigenschaften beim Durchfahren von Kurven erzielt.

Bevorzugt sind zwei ringartige Elemente zwischen der Felge und dem Reifen vorgesehen, wobei das Material des einen ringartigen Elements zugfest (praktisch keine Dehnung bei Zugbelastung) im Vergleich zum Material des anderen ringartigen Elementes ist. Als zugfestes Material kann ein Metall vorgesehen sein. Das andere Material verhält sich elastisch. Durch das zugfeste Material wird eine gewünschte Zugfestigkeit bei der anspruchsgemäßen Vorrichtung erzielt. Durch Vorsehen des elastischen Materials gelingt in einfacher Weise eine Anpassung der verschiedenen aneinander grenzenden Oberflächen von Reifen an das ringartige Element und/oder vom ringartigen Element an die Felge.

Insbesondere die Kontaktfläche zwischen dem ringartigen Element und dem Reifen kann auf diese Weise vergrößert werden. Die seitliche Abstützung des Reifens erfolgt dann über eine besonders große Fläche, wodurch sich der spezifische Druck reduzieren läßt. Die verbesserte Fahrstabilität bei Durchfahren von Kurven wird so weiter sichergestellt.

Die beiden ringförmigen Elemente können aneinander befestigt, so zum Beispiel miteinander verklebt oder vulkanisiert sein. Erwünscht wird so ein Halt zwischen den beiden Elementen geschaffen, um so die Montage zu vereinfachen und Störungen zu vermeiden. Sie sind dann kraftschlüssig miteinander verbunden.

Die vorgenannten beiden ringförmigen Elemente grenzen insbesondere wellen- und/ oder zickzackförmig aneinander.

Das zugfeste Element kann gelocht oder geschlitzt sein. Hierdurch wird ein formschlüssiger Halt zwischen den beiden ringförmigen Elementen und damit die Stabilität der Vorrichtung verbessert. Auch können so mögliche Fehler bei der Montage vermieden werden.

Vorteilhaft ist die an die Felge grenzende Seite des ringartigen Elementes so geformt, dass sie als Gegenstück zur Form der Felge bzw. des Felgenhorns ausgebildet ist. Das ringartige Element liegt dann großflächig sowie formschlüssig an der Felge an. Die Betriebsfunktion der Vorrichtung wird so weiter sichergestellt.

In einer Ausgestaltung der Vorrichtung bestehen das oder die ringartigen Elemente aus wenigstens zwei lösbar miteinander verbunden Teilen. Beispielsweise setzt sich ein ringartiges Element aus zwei halbkreisförmigen Teilen zusammen. So kann eine konventionelle Felge nachträglich problemlos mit dem ringartigen Element versehen werden, auch wenn dieses einen zugefesten Ring aufweist.

In einer weiteren Ausgestaltung ist der Außendurchmesser des oder der ringartigen Elemente durch eine aus elastischem Material bestehende Schicht gebildet. Es kann sich um ein drittes ringartiges Element oder um eine Fortsetzung eines vorhergehenden Elements handeln. Diese Schicht ragt über die Felge hervor, und zwar insbesondere um 5 bis 15 mm. Die Gefahr von Beschädigungen der Felge und / oder des Reifens bei auftretendem Druckverlust im Reifen werden so verringert. Es wurde festgestellt, dass der drucklose Reifen aufgrund der relativ festen erfindungsgemäßen Einspannung zwischen Hump und ringartigem Element regelmäßig nicht aus seinem Sitz springt, sondern auf der Felge verbleibt. Der Reifen rollt dann auf der elastischen Schicht und nicht auf den Felgenhörnern. Der Reifen wird daher durch die Felge bei verringerter Geschwindigkeit nicht zerschnitten. Das Fahrzeug läuft so im Pannenfall verbessert auf dem drucklosen Reifen weiter. Auf die Montage eines Notlauf- oder Ersatzrades kann unter diesen Umständen verzichtet werden. Das Mitführen eines Reserverads kann entfallen.

Das oder die ringartigen Elemente sind an der Felge vorzugsweise lösbar befestigt. Dies gelingt beispielsweise besonders einfach, indem sich das ringartige Element über und um das Horn herum erstreckt. Diese Ausgestaltung ist für den Notlauf im Pannenfall wichtig, damit die ringartigen Elemente ausreichend fest sitzen. Auch wird so die richtige Montage vereinfacht.

In einer Ausgestaltung der Erfindung ist ein elastisches ringartiges Element vorgesehen. Zur Montage wird diese zunächst oval verformt und so mit seinem größeren Durchmesser über das Felgenhorn geführt. Durch anschließendes Pressen gegen das Felgenhorn erhält das ringartige Element seinen für die gewünschte Funktion benötigten festen Sitz und eine stabile Kontur. Insbesondere bei einer polymeren Oberfläche erhält das ringartige Element aufgrund des dann hohen Reibwertes seinen festen Sitz.

In einer weiteren Ausgestaltung der Erfindung weist die Fläche des ringartigen Elementes, die an den Reifen grenzt, eine unebene Oberfläche auf. Einem unerwünschten Durchrutschen des Reifens wird so entgegengewirkt.

Die Oberfläche des ringartigen Elementes, das an den Reifen grenzt, weist bevorzugt einen hohen Reibwert auf, um so ein mögliches Durchrutschen des Reifens bzw. des ringartigen Elementes am Felgenhorn weiter verbessert zu verhindern. Als Material kommen daher insbesondere Hartgummi, Douroplast oder Polymer-Kunststoffe für die vorgenannte Oberfläche in Betracht.

Ein unerwünschtes Durchrutschen des Reifens stellt insbesondere bei auftretendem Druckverlust ein Problem dar. Hierdurch kann der Reifen schließlich so beschädigt werden, das die Felge direkt auf der Fahrbahn aufliegt. Es ist dann praktisch nicht möglich, die Fahrt bei geringer Geschwindigkeit notfallmäßig fortzusetzen.

Das ringartige Element kann in einer Ausgestaltung auch an die Felge fest anvulkanisiert oder geklebt werden. Dies kann für Erstmontagen serienmäßig durchgeführt werden oder auch nachträglich erfolgen. Das ringartige Element wird dann mit seiner Herstellung zugleich angebracht. Ferner wird so eine Befestigung des ringartigen Elementes an der Felge geschaffen.

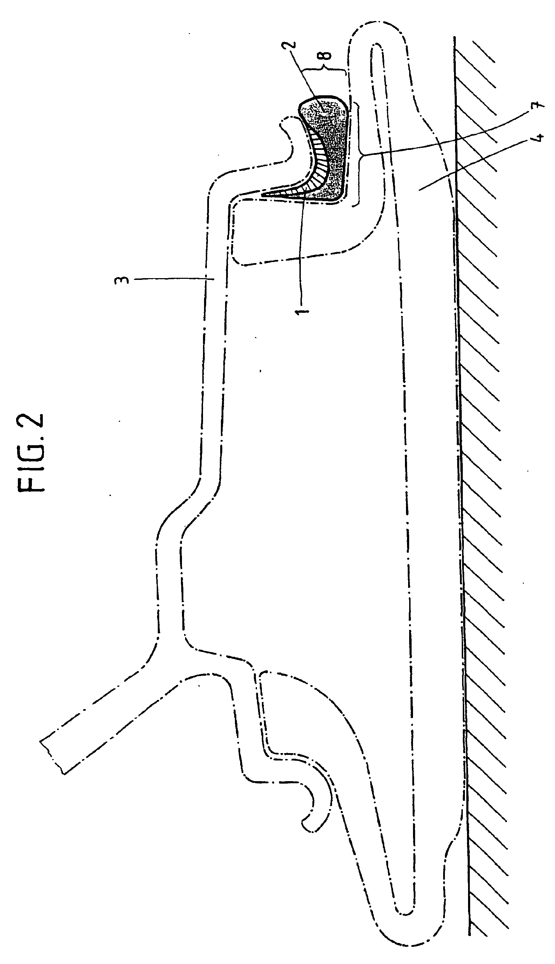

Das ringartige Element wird vorzugsweise auf dem jeweils inneren Felgenhorn, wie in Figur 2 gezeigt, der Felge angebracht. In Sonderfällen können jedoch auch beide Felgenhörner anspruchsgemäß mit einem ringartigen Element versehen sein.

In Abhängigkeit vom Fahrstil kann mit einer längeren Lebensdauer der Reifen gerechnet werden, da die verbesserte Seitensteifigkeit des Reifens zu einem gleichmäßigeren Abrieb über die Breite der Lauffläche führt. Das oder die ringartigen Elemente sind leicht und können preiswert hergestellt werden. Beim Durchfahren einer Kurve wird infolge der erfindungsgemäß gewonnenen höheren Abstützhöhe eines Reifens gegen die von der Kurvenaußenseite angreifenden Kräfte dieser nun deutlich weniger zur Fahrzeugmitte hin verschoben. Der Reifen kann im Vergleich zur konventionellen Felge bei gleichem Lenkwinkel höhere Seitenkräfte übertragen. Dabei verliert der Reifen jedoch nicht seine Fähigkeit, weich einzufedern.

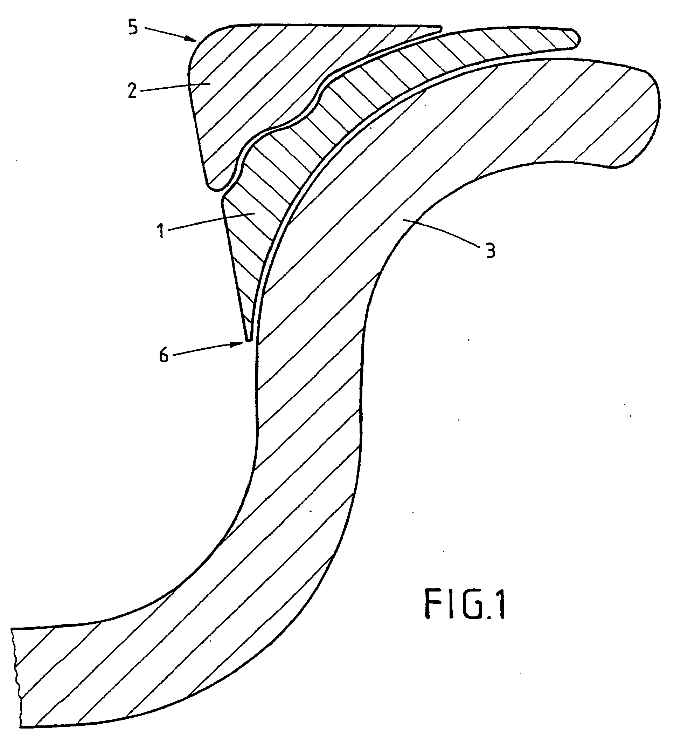

In Figur 1 wird die Erfindung beispielhaft verdeutlicht. Die in Figur 1 im Schnitt gezeigte Vorrichtung weist ein unteres ringartiges Element 1 und ein darüber befindliches oberes ringartiges Element 2 auf. Das untere ringartige Element 1 grenzt an eine Felge 3. Aus Gründen der Übersichtlichkeit ist ein Reifen nicht eingezeichnet. Ferner wird nur ein Ausschnitt der Felge 3 dargestellt.

Der Außendurchmesser der ringartigen Elemente 1 und 2 überragen am äußeren Rand nur unwesentlich den Außendurchmesser der Felge 3, um einen festen Sitz zu gewährleisten. Das Material des unteren, an die Felge grenzenden ringartigen Elements 1 ist zugfest im vergleich zum Material des oberen, ringartigen Elementes 2. Als zugfestes Material ist Metall oder ein faserverstärktes Spritz- oder Gußteil vorgesehen. Das andere Material besteht aus einem Hartgummi. Die Kontaktfläche zwischen dem ringartigen Element und dem Reifen wird so besonders groß. Hierdurch wird ferner der Schlupf zwischen dem Reifen und dem ringartigen Element insbesondere bei einem drucklosen Reifen vorteilhaft minimiert.

Die vorgenannten beiden ringförmigen Elemente 1 und 2 grenzen wellenförmig und somit formschlüssig aneinander. Ferner sind sie miteinander verklebt und somit kraftschlüssig verbunden. Die an die Felge 3 grenzende Seite des unteren ringartigen Elementes 1 ist so geformt, dass sie als Gegenstück zur Form der Felge 3 ausgebildet ist. Das untere ringartige Element 1 liegt so großflächig an der Felge 3 an.

Der Querschnitt der ringartigen Elemente 1 und 2 nimmt zusammengenommen zum Außendurchmesser hin zu. Die an den Reifen angrenzende Fläche des betreffenden ringartigen Elementes ist nach innen, also zum nicht dargestellten Reifen hin geneigt. Sie reicht so mehr und mehr in das Innere der Felge, je weiter der Mittelpunkt des Ringes entfernt ist. Das obere ringartige Element 2 überragt nach innen (in Richtung des Reifens) das untere ringförmige Element 1. Innen verläuft also der Übergang zwischen dem unteren ringförmigen Element 1 und dem darüber befindlichen ringförmigen Element 2 etwa stufenförmig. So wird sichergestellt, dass (auch) das obere, aus elastischem Material bestehende ringförmige Element 2 fest an dem Reifen anliegt.

Die an den Reifen grenzenden Fläche der beiden ringartigen Elemente ist im wesentlichen eben. Der Reifen wird also auf einem größeren Durchmesser 5 abgestützt im Verhältnis zum herkömmlichen Abstützdurchmesser 6. Er wird außerdem zur Radmitte verschoben.

In einer Ausgestaltung gemäß Figur 2 ragt das obere ringartige Element 2 mit einer erweiterten Fläche über die Felge hervor und bildet für den Notlauf eine große Abstützfläche. Es umschließt etwas das Felgenhorn. Es wird so eine formschlüssige elastische Verbindung zwischen den ringartigen Elementen 1 und 2 und der Felge 3 erreicht. Die Montage wird so vereinfacht. Maßtoleranzen können so ausgeglichen werden. Bei drucklosem Reifen läuft der Reifen auf elastischem Material des ringartigen Elementes 2 und nicht unmittelbar auf den Felgenhörnern. Ein Zerschneiden des Reifens z.B. durch das äußere Felgenhorn wird so vermieden. Das ringartige Element 1 ist mit dem ringartigen Element 2 verklebt und somit kraftschlüssig verbunden. Darüber hinaus besteht eine Verbindung durch Formschluß.

Gezeigt wird in der Figur 2 der Fall eines drucklosen Reifens 4. Beschädigungen beim Reifen 4 werden so verringert, da die Felge nicht mehr unmittelbar auf dem drucklosen Reifen 4 aufliegt.

Fahrzeugräder von 10"- bis 18" - Größe sind besonders gut geeignet. Seitlich wird der Reifen durch das ringförmige Element regelmäßig ca. 7 mm höher im Vergleich zu gleich hohen konventionellen Felgenhörnern abgestützt.

Figur 2 verdeutlicht die Verbreiterung der Auflagefläche des drucklosen Reifens 4 durch das elastische Material des Elementes 2. Ferner wird ein Zugewinn an Höhe 8 erzielt. Der drucklose Reifen wird daher nicht mehr durch die Felgenhörner zerschnitten.

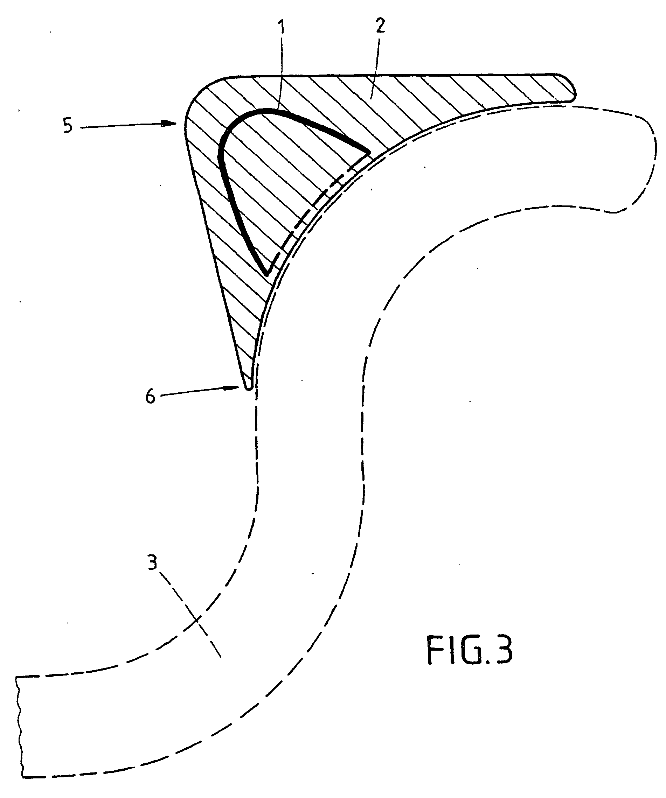

Figur 3 zeigt eine Ausführungsform, bei der ein ringförmiges zugfestes Element 1 von einem ringförmigen elastischen Element 2 umgeben ist. Aufgrund von Schlitzen dringt das Material des Elementes 2 in das innere des Elementes 1 ein. Auf diese Weise sind die beiden Elemente fest miteinander verbunden.

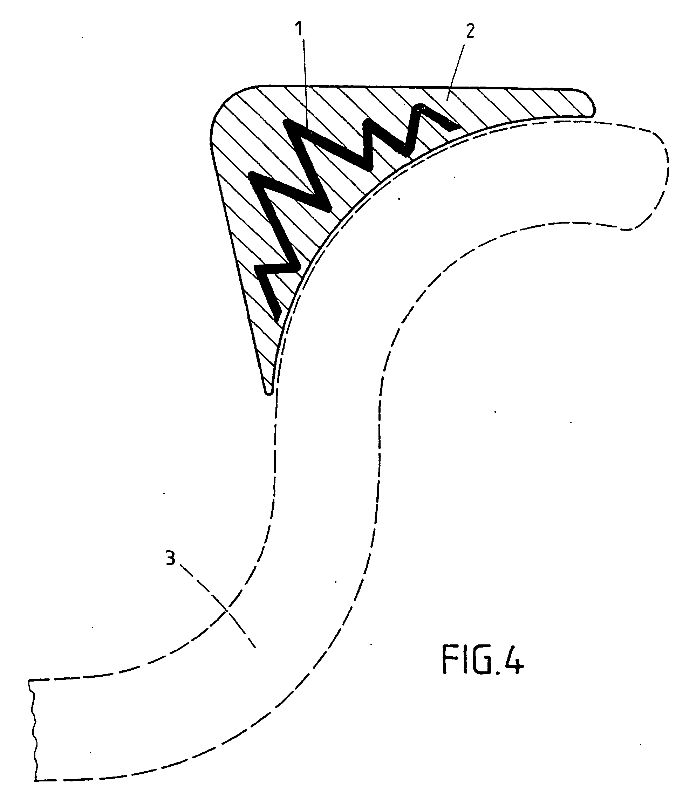

Die Figur 4 zeigt ein zickzackförmiges zugfestes, ringförmiges Element 1 welches von einem elastischen, ringförmigen Element 2 eingehüllt wird.

## Patentansprüche

1. Rad für ein Fahrzeug mit mindestens einem ringartigen Element (1, 2) zwischen einer Felge (3) und einem Reifen (4), bei dem die Breite des oder der ringartigen Elemente (1, 2) zum Außendurchmesser hin so zunehmen, dass die an den Reifen (4) angrenzende Fläche des betreffenden ringartigen Elementes (1, 2) zunehmend nach innen geneigt sind.

2. Rad nach Anspruch 1, bei der der Außendurchmesser des ringartigen Elements im wesentlichen mit dem Außendurchmesser der Felge bzw. dessen Felgenhörnern übereinstimmt.

3. Rad nach Anspruch 1 oder 2, bei der zwei ringartige Elemente zwischen der Felge und dem Reifen vorgesehen sind, wobei das Material des einen ringartigen Elements zugfest im Vergleich zum Material des anderen ringartigen Elementes ist.

4. Rad nach einem der vorhergehenden Ansprüche, bei der ein ringartiges Element (1) aus Metall oder einem zugfest, faserverstärkten Guß- oder Spritzmaterial besteht.

5. Rad nach einem der vorhergehenden Ansprüche, bei der ein ringartiges Element (2) aus einem Polymer, Duroplast oder Hartgummi besteht.

6. Rad nach einem der vorhergehenden Ansprüche, bei der die an die Felge (3) grenzende Seite des oder der ringartigen Elementes (1,2) so geformt sind, dass sie als Gegenstück zur Form der Felge bzw. des Felgenhorns ausgebildet ist.

7. Rad nach einem der vorhergehenden Ansprüche, wobei das oder die ringartigen Elemente aus wenigstens zwei lösbar miteinander verbunden Teilen bestehen.

8. Rad nach einem der vorhergehenden Ansprüche, bei der der Außendurchmesser des oder der ringartigen Elemente (1, 2) durch eine aus elastischem Material bestehende Schicht gebildet ist, die das Felgenhorn vorzugsweise um bis zu 20 mm überragt.

9. Rad nach einem der vorhergehenden Ansprüche, bei der das oder die ringartigen Elemente (1, 2) an der Felge (3) lösbar befestigt sind.

10. Rad nach einem der vorhergehenden Ansprüche, bei der das oder die ringartigen Elemente (1, 2) formschlüssig sowie elastisch mit der Felge (3) verbunden sind.

11. Rad nach einem der vorhergehenden Ansprüche, bei der ein unteres, zugfestes ringartiges Element (1) und ein darüber befindliches, oberes, elastisches ringartiges Element (2) vorgesehen ist, wobei der Übergang vom unteren ringartigen Element (1) zum oberen ringartigen Element (2) an der Seite stufenförmig ansteigt, die an den Reifen (4) grenzt.

12. Rad nach einem der vorhergehenden Ansprüche, bei dem ein ringartiges zugfestes Element von einem oder mehreren elastischen ringartigen Elementen umgeben ist.

## Claims

1. Wheel for a vehicle, comprising at least one ring-like element (1, 2) between a rim (3) and a tyre (4), wherein the width of the ring-like element(s) (1,2) increases in the direction of the outer diameter in such a manner that the surface of the respective ring-like element (1, 2) adjoining the tyre (4) is increasingly tilted inwardly.

2. Wheel according to claim 1, wherein the outer diameter of the ring-like element substantially matches the outer diameter of the rim and/or of its rim flanges.

3. Wheel according to claim 1 or 2, wherein two ring-like elements are provided between the rim flange and the tyre, wherein the material of the one ring-like element is resistant to tensile stress compared to the material of the other ring-like element.

4. Wheel according to one of the preceding claims, wherein a ring-like element (1) consists of metal or of a fibre-reinforced moulded or injection-moulded material that is resistant to tensile stress.

5. Wheel according to one of the preceding claims, wherein a ring-like element (2) consists of a polymer, thermosetting plastics or hard rubber.

6. Wheel according to one of the preceding claims, wherein the side of the ring-like element(s) (1, 2) adjoining the rim (3) is shaped so that it is formed as counterpart to the shape of the rim and/or of the rim flange.

7. Wheel according to one of the preceding claims, wherein the ring-like element(s) consists of at least two parts that are detachably connected with each other.

8. Wheel according to one of the preceding claims, wherein the outer diameter of the ring-like element(s) (1, 2) is formed by a layer consisting of an elastic material which protrudes over the rim flange preferably by up to 20 mm.

9. Wheel according to one of the preceding claims, wherein the ring-like element(s) (1, 2) are detachably mounted to the rim (3)

10. Wheel according to one of the preceding claims, wherein the ring-like element(s) (1, 2) are positively as well as elastically connected with the rim (3).

11. Wheel according to one of the preceding claims, wherein a lower ring-like element (1) that is resistant to tensile stress and an upper elastic ring-like element (2) located thereover are provided, the transition from the lower ring-like element (1) to the upper ring-like element (2) ascending in steps on the side adjoining the tyre (4).

12. Wheel according to one of the preceding claims, wherein a ring-like element that is resistant to tensile stress is surrounded by one or several elastic ring-like elements.

## Revendications

1. Roue pour un véhicule automobile comportant au moins un élément de type bague (1, 2) entre une jante (3) et un pneu (4), dans laquelle la largeur de l'élément ou des éléments de type bague (1, 2) augmente en direction du diamètre externe de telle sorte que la surface, de l'élément de type bague concerné (1, 2), adjacente au pneu (4), est inclinée de manière croissante vers l'intérieur.

2. Roue selon la revendication 1, dans laquelle le diamètre externe de l'élément de type bague correspond sensiblement au diamètre externe de la jante ou de ses bourrelets.

3. Roue selon la revendication 1 ou 2, dans laquelle deux éléments de type bague sont prévus entre la jante et le pneu, le matériau de l'un des éléments de type bague étant résistant à la traction en comparaison avec le matériau de l'autre élément de type bague.

4. Roue selon l'une quelconque des revendications précédentes, dans laquelle un élément de type bague (1) est composé de métal ou d'un matériau coulé ou injecté résistant à la traction, renforcé par des fibres.

5. Roue selon l'une quelconque des revendications précédentes, dans laquelle un élément de type bague (2) est composé d'un polymère, d'une matière thermodurcissable ou d'un caoutchouc durci.

6. Roue selon l'une quelconque des revendications précédentes, dans laquelle le côté, du ou des éléments de type bague (1, 2), adjacent à la jante (3) est formé de telle sorte qu'il soit réalisé sous la forme de pendant à la forme de la jante ou du bourrelet.

7. Roue selon l'une quelconque des revendications précédentes, le ou les éléments de type bague étant composé(s) d'au moins deux pièces raccordées de manière amovible.

8. Roue selon l'une quelconque des revendications précédentes, dans laquelle le diamètre externe du ou des éléments de type bague (1, 2) est formé d'une couche composée d'un matériau élastique qui dépasse de préférence jusqu'à 20 mm du bourrelet.

9. Roue selon l'une quelconque des revendications précédentes, dans laquelle le ou les éléments de type bague (1, 2) sont fixés de manière amovible à la jante (3).

10. Roue selon l'une quelconque des revendications précédentes, dans laquelle le ou les éléments de type bague (1, 2) sont raccordés par coopération de formes ainsi que de manière élastique à la jante (3).

11. Roue selon l'une quelconque des revendications précédentes, dans laquelle on a prévu un élément de type bague inférieur (1) résistant à la traction et un élément de type bague élastique supérieur (2), se trouvant au-dessus, la transition de l'élément de type bague inférieur (1) à l'élément de type bague supérieur (2) se faisant sous forme de gradins sur le côté qui est adjacent au pneu (4).

12. Roue selon l'une quelconque des revendications précédentes, dans laquelle un élément résistant à la traction de type bague est entouré d'un ou de plusieurs éléments de type bague élastiques.
